# EUROPEAN PATENT APPLICATION

(11) **EP 2 797 330 A1**
(43) Date of publication of application: **29.10.2014**
(21) Application number: 13165495.6
(22) Date of filing: 26.04.2013
(51) Int. Cl.: H04N 21/436, H04N 21/4363, H04W 64/00

(54) **Media hand-off with graphical device selection**

(71) Applicant: BlackBerry Limited, Waterloo, ON N2K 0A7 (CA)
(72) Inventor: Wilson, Kelce Steven, Irving, TX Texas 75039 (US); Pham, Duc-Ngon Thi, Irving, TX Texas 75039 (US); Jurgovan, Jon Matthew, Irving, TX Texas 75039 (US)
(74) Representative: Bryn-Jacobsen, Caelia

(57) **Abstract**

A wireless user device has a first antenna operable within a first wireless function frequency band and a second antenna operable within a second wireless function frequency band different than the first operable within a first wireless function frequency band. Circuitry configured to process signals received by the first antenna and the second antenna is further configured to identify and resolve locations of a plurality of remote wireless devices by signal phase comparison. A display screen is configured to display an icon for the identified remote wireless device at an area of the display screen that corresponds to the relative location of the remote wireless device with respect to the user device.

## Description

### BACKGROUND

The present invention relates generally to wireless communication systems and, more particularly, to enabling selection of one of a number of digital communication devices for wireless transfer of information.

Content connectivity in a residence or office environment is becoming more attractive to simplify the way information is controlled and delivered. As more residences are built to accommodate a digital environment (digital home), the prior practice of having many different systems that operate independently from one another is undesirable for a number of reasons. In a typical home, a variety of electrical devices are present, but most of these devices operate independently from one another. For example, a television system may include one or more displays, a digital video recorder (DVR), a digital video disc (DVD) recorder/player, and a converter (generally known as a set-top box). A television system in a home is typically connected together by a coaxial cable that runs through the home.

Another system that may be present in a home is a telephone system in which one or more telephone units are distributed throughout the house. A home telephone system may be wired or wireless or a combination of the two.

Still another system typically found in a home is a computer system in which one or more computers are connected to various peripherals, such as printers, cameras, compact disk (CD) or DVD players, mass storage units, routers, etc. Typically, various components of a home computer system are tied together by a router and/or a server through a wired local area network (LAN), a wireless LAN (WLAN) or a combination of both wired and wireless local area network, as well as other connectivity. Further, the home computer network is coupled to external networks, such as the Internet, through cable modem connections, DSL (Digital Subscriber Line) modem connections, telephone connections and/or microwave (e.g. satellite) connections, as well as other connections.

In an existing home, many of these systems operate independently from one another, and complications are well noted in tiying to bridge content from one system to another. For example, a digital photo may be readily transferred from a camera to a computer, so that a photo may be printed from a printer connected to the computer. However, it is typically not possible to transfer the photo for display onto a television set. Likewise, a movie that may be played from a DVD player of a notebook computer may be watched on the notebook display, but that same movie cannot be watched on a television set in the home, unless the DVD is physically transferred to a DVD player connected to the television set or unless the notebook video output is connected to the television set.

More recently, a concept for an integrated digital home has emerged in order to tie together the various digital systems in a home. By developing an interoperable network to integrate both wired and wireless platforms, content may be delivered across these different platforms and shared seamlessly by devices coupled to the interoperable network. For example, personal computers (PCs), consumer electronics (CEs) and mobile devices, such as cellular telephones (cell phones), personal digital assistants (PDAs) and mobile multimedia devices (e.g. portable MP-3 players), may transfer content among themselves with minimal or no effort from the person wanting the content.

One entity that is attempting to form a cross-industry convergence of platforms is the Digital Living Network Alliance (DLNA). The various platforms, such as set-top boxes (STBs), PCs, DVD players, gaming machines, MP-3 players, Blue Ray™ players, mobile phones, personal media players, as well as others, may be integrated using one or more connectivity methods, such as by multimedia over cable (MoCA) wired connection, Wi-Fi™ wireless connection, Ethernet wired LAN connection, Bluetooth™ wireless connection, Blue-Fi wireless connection, optical connectivity and power line connectivity, etc. Once these various systems are tied together for seamless content sharing in a home network, content obtained from one platform may be transferred seamlessly to another platform using some form of connectivity.

Once the interoperable system is available in a home, the content to and/or from the various platforms may be manipulated in a variety of ways. This is possible since a previously passive device, such as a television set, is now coupled to a processing device, such as a PC or a cell phone, so that additional computational power is now available to control content delivery to the passive device or to other devices. Thus, new techniques to exploit this interoperability across platforms may be implemented to further control or enhance content delivery.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:

Figure 1 is a schematic diagram of a plurality of digital devices that may be included in an exemplary media synchronization system, such as a DLNA compliant network;

Figure 2 illustrates an arrangement of internal components of the user device shown in Figure 1 according to an embodiment of the disclosure;

Figure 3 illustrates the use of a swipe path to select one of a plurality of remote wireless devices according to an embodiment of the disclosure;

Figure 4 illustrates the use of multiple swipe paths to select one of a plurality of remote wireless devices disposed in approximately the same direction with respect to the user device according to an embodiment of the disclosure;

Figure 5 illustrates a further arrangement of internal components of the user device shown in Figure 4 according to an embodiment of the disclosure;

Figure 6 illustrates a display of remote wireless device icons on the touchscreen of the user device according to an embodiment of the disclosure;

Figure 7 illustrates the use of a swipe path to transfer a file from one remote device to another remote device according to an embodiment of the disclosure;

Figure 8 is a flow diagram illustrating a method of implementing digital media hand-off according to an embodiment of the disclosure;

Figure 9 illustrates the use of a flick or other quick movement of the user device to select one of a plurality of remote wireless devices according to an embodiment of the disclosure;

Figure 10 illustrates selection between remote devices with overlapping direction using longer or shorter movement of the user device according to an embodiment of the disclosure;

Figure 11 illustrates the use of a flick or other quick movement of the user device to transfer a file from one remote device to another remote device according to an embodiment of the disclosure;

Figure 12 is a flow diagram illustrating a method of implementing digital media hand-off according to another embodiment of the disclosure; and

Figure 13 is a block diagram of the user device capable of being used with the systems and methods of the embodiments described herein.

### DETAILED DESCRIPTION

As indicated above, because consumers typically have multiple devices that are capable of playing media files (such as video and audio recordings), they may wish to play a particular file on different ones of those devices. For example, if a person walks into their home while playing a movie on their smartphone, they may wish to transfer the movie to a larger screen television.

One implementation of existing technology enables a user to swipe the screen of a smartphone in a media synchronization system (e.g., a DLNA compliant device) that is playing a media file when it is within range of another device in the system. At that point, the other device takes over playing the media file. A problem arises, however, in the event that the smartphone senses multiple other devices within the media synchronization system. A gesture (for example, a simple swiping action) does not specify which device should take over. In one existing approach, when the smartphone senses multiple devices nearby, the user is presented with a menu, in the form of a list, and must select the device from the presented menu items. This is not very elegant, however, and detracts from the user's graphical user interface (GUI) experience.

Accordingly, exemplary embodiments disclosed herein enable a user to select a specific one of multiple DLNA compliant devices by use of a gesture, e.g., either swiping on the smartphone touchscreen toward the selected device, flicking the smartphone toward the selected device, or tapping on an icon that corresponds to the selected device and is displayed on the smartphone's screen in a position, relative to the other devices, that corresponds to the relative actual physical positions of those devices. In contrast to simple "GUI-swipe" devices, an aspect of the present teachings also utilizes radio wave phase or timing measurements, and a smartphone's radio receivers in a novel manner as set forth in further detail below.

DLNA currently uses a device's Wi-Fi radio. However, this prevents direction finding, which is a central feature of the present embodiments. There are several reasons why existing Wi-Fi implementations cannot perform such direction finding. First, direction finding requires multiple separated phase centers, which in turn requires the use of multiple antennas. On the other hand, current Wi-Fi implementations in smartphones use only a single antenna due to extremely restrictive design parameters regarding smartphone size, weight, and power usage. Second, Wi-Fi systems in smartphones are intentionally designed to be as omnidirectional as possible. This is because the designer of a smartphone Wi-Fi antenna cannot know, at design time, how a user might orient the smartphone at any given time relative to another Wi-Fi device, such as a Wi-Fi router, as the possibilities are numerous. Third, Wi-Fi systems use timing and device IDs for device selection. Accordingly, since the device differentiation problem is already widely-recognized in the Wi-Fi community as being thoroughly addressed and solved for the purposes that are already known for Wi-Fi radio systems, there has been no previous need to unnecessarily complicate Wi-Fi radio systems in smartphones with another differentiation system.

As stated above, the current GUI control for selecting DLNA transfer, i.e., menu-based control, is less than elegant when multiple DLNA compliant devices are within range of a user's device from which the user wishes to push a media file to one of multiple destinations (or to which the user wishes to pull a media file from one of multiple sources). Accordingly, the embodiments disclosed herein address the above disadvantages by focusing on and relying upon an underlying technical enablement that is presently not available. In so doing, the embodiments also address the cost issue(s) by providing an inexpensive solution to the technical issue(s).

In brief, the disclosed embodiments leverage several technical conveniences to provide an inexpensive technical solution to directional finding. This may be understood more fully by consideration of the following:

First, smartphones currently already have multiple antennas that are useable in the frequency range of Wi-Fi, but such antennas are not conventionally connected to a Wi-Fi receiver. For example, existing smartphones may include cellular antennas, GPS antennas, and Bluetooth antennas. In some devices, a Bluetooth antenna might be shared with a Wi-Fi system. Future smartphone technologies may include multiple cellular antennas in order to support long term evolution (LTE) multiple input multiple output (MIMO) data rates. (MIMO may be implemented with a single cellular antenna, albeit poorly, compared with dual-antenna MIMO systems.)

Second, direction finding is far less demanding on a receiver in comparison to signal decoding. Signal decoding, which is necessary for communication, must ensure sufficient signal-to-noise ratio (SNR) to provide an acceptable bit error rate (BER). This functionality can be demanding on antenna design and requires an antenna that is optimized for providing a high SNR.

Third, direction finding by phase comparison is a receive-only function (as opposed to transmitting and receiving). As such, direction finding can be performed with an antenna that is not optimized. In contrast, antennas that also transmit should be optimized for performance at the operating frequency in order to prevent wasted transmitter power that in turn will shorten battery life. Fourth, range finding capability is already present in Wi-Fi systems by measuring time delay.

The embodiments described herein advantageously recognize that the combination of these conveniences permits the opportunistic use of another antenna (that is already present in the smartphone) to be used as a second phase center for direction finding, even though that other antenna is optimized for a completely different function (e.g., such as cellular communications) and, thus, would be a rather poor performer as a Wi-Fi communication antenna.

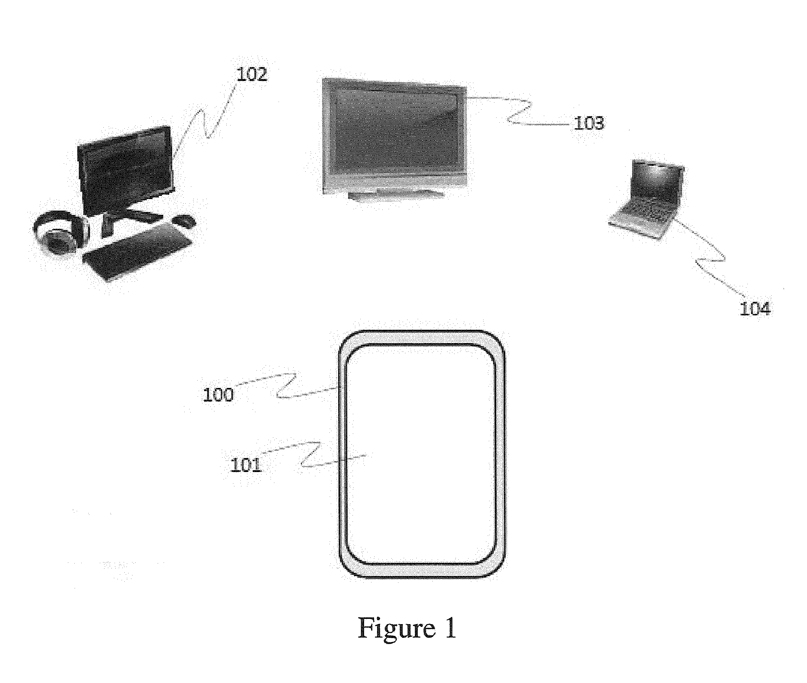

Figure 1 illustrates a schematic diagram of a plurality of digital devices that may be included in an exemplary DLNA compliant network. As illustrated, the devices include a user device 100 having a screen 101, which is in the vicinity of multiple DLNA compliant remote devices 102, 103, and 104. Screen 101 may be any type of screen that is capable of detecting a swipe or other gesture. For example, screen 101 may be an inductive or capacitive touchscreen that utilizes pressure touch. Screen 101 also may implement a touchless or non-contact means to detect finger or hand motion over the device. For example, screen 101 may utilize image sensors, electric field sensing and/or capacitive sensing in order to provide a touch-free experience. Such adaptations are contemplated within the scope of this disclosure. It also should be appreciated that in lieu of DLNA, a different media synchronization system may also be used. In an exemplary embodiment, the user device 100 may represent a smartphone, tablet computer or other device capable of playing media files. In addition, the exemplary embodiment of Figure 1 depicts the remote device 102 as being a desktop computer, the remote device 103 as being a television screen, and the remote device 104 as being a notebook computer. Again, it should be understood that the illustrated devices are merely representative in nature and are not intended to limit the scope of the disclosure. Other, non-limiting examples of remote devices include a routing device or a speaker. Examples of routing devices can include set-top boxes, digital video recording device, Samsung's Homesync device, Apple's Apple TV device or other devices.

Each of the remote devices 102-104 shown in Figure 1 are within range of the media synchronization system that is being used by user device 100. Accordingly, if a user of device 100 desired to off-load a media file to one of the remote devices 102-104, the user device 100 would need further instruction on which one of remote devices to select. Additionally, a user might wish to pull a media file from one of remote devices 102-104 onto user device 100. If multiple ones of remote devices 102-104 are currently playing a media file, or otherwise have a media file available for off-load, then a pull instruction from a user on user device 100 would need further instruction regarding from which of remote devices 102-104 the media file should be pulled. It should be appreciated that specific data transfer mechanisms are already described in existing DLNA publications and are not described in further detail hereinafter.

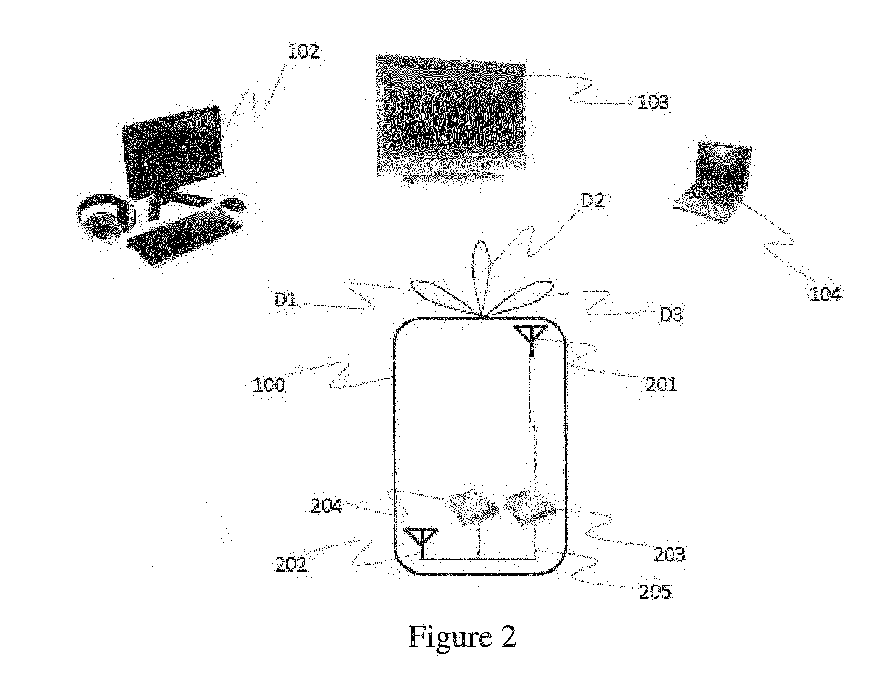

Referring now to Figure 2, internal components of the user device 100 are depicted in further detail so as to illustrate the technical functionality that enables direction finding. As is shown, the user device 100 includes both a Wi-Fi antenna 201 and a cellular antenna 202; however, a different a set of antennas could also be included in the user device 100. In any case, the primary requirements for the antenna pair include physical separation of the antennas and sufficient operation within the radio band of interest such that phase differences therebetween can be ascertained.

For operation purely in a direction finding role, an antenna does not need to be optimized for transmitting in the radio band. For example, the Wi-Fi antenna 201 is coupled to a Wi-Fi receiver 203, and the cellular antenna 202 is coupled to a cellular receiver 204. In general, these receivers will have different operating configurations such that it is impractical to combine the two using current radio technology and spectrum allocation. Thus, in the illustrated embodiment, the cellular antenna 202 is provided with a second connection path 205 to the Wi-Fi receiver 203. The receivers 203, 204 can include the radio front end circuitry. It is common to isolate different radio frequency (RF) transmission lines with isolators although for some operations this may not be necessary. Additionally, a tuning element (not shown) on path 205 may optionally be used for switching in order to isolate undesirable RF effects between receivers 203 and 204. Receivers 203 and 204 include circuitry for processing signals received by antennas 201, 202, and may perform operations such as, for example, decoding modulated signals and ascertaining time of arrival or carrier phase information. In one embodiment, an acceptable resolution for phase differentiation may be about 22.5 degrees.

Figure 2 also schematically depicts three direction finding lobes emanating from the user device 100: D1 pointing to remote device 102; D2 pointing to remote device 103; and D3 pointing to remote device 104. It should be understood, however, that these direction finding lobes are notional only and are the result of phase-differentiation calculations that are know in the art.

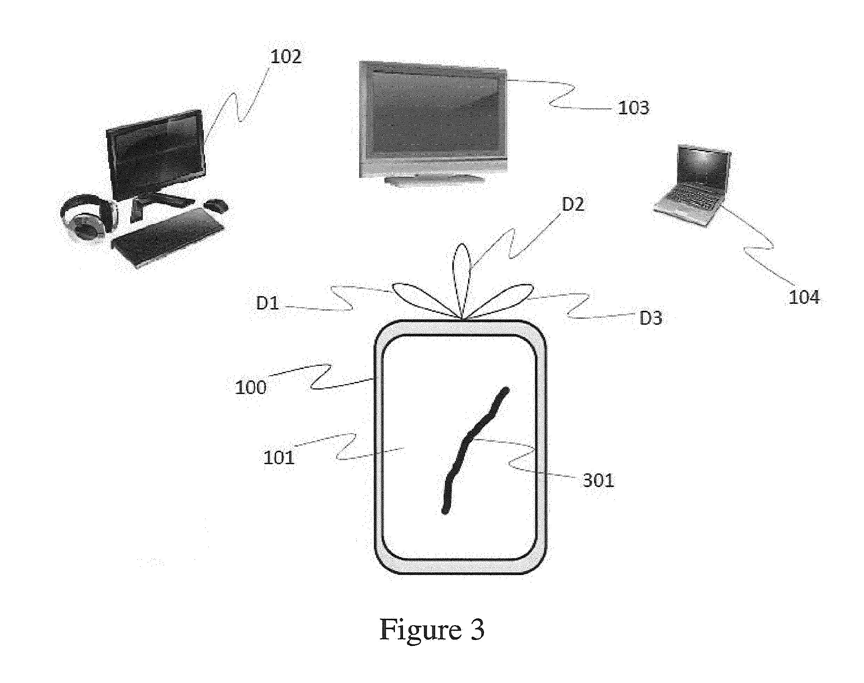

Figure 3 illustrates a sensed swipe path 301 on the screen 101 of the user device. As shown, the primary direction of swipe path 301 most closely aligns with direction lobe D3 than either of the other direction lobes D1 and D2. The swipe path 301 could be either a push motion (i.e., from the user toward the remote device 104) or a pull motion (i.e., from the remote device 104 toward the user). The direction of swipe path 301 may be correlated with the direction of direction lobe 103, but that is due to the relationship between the positions of remote devices 102-104 and the orientation of screen 101 on user device 100. Thus, if the user device 100 rotates by a sufficiently large angle, the directions of lobes D1-D3 would change relative to the orientation of screen 101, and the particular path that is illustrated on the screen might then better correlate with the direction to remote device 103, for example.

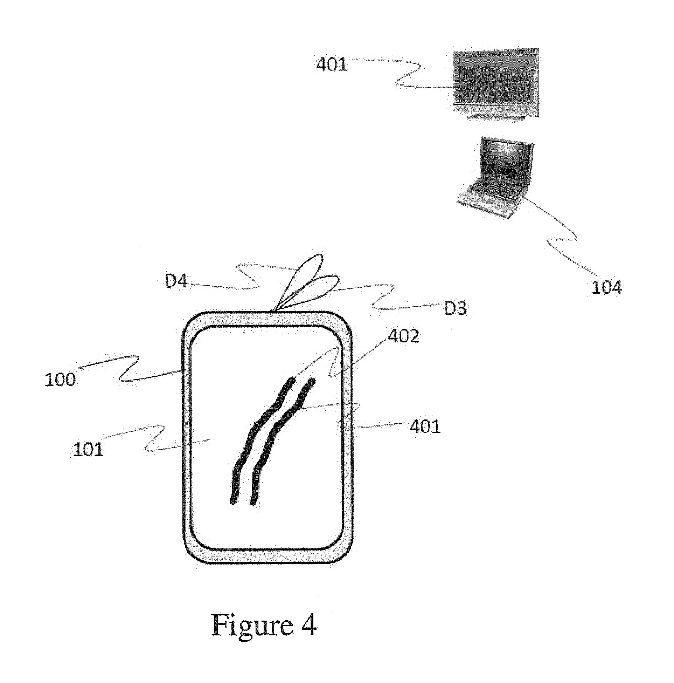

Because many smartphone form factors can be relatively small, in terms of the radio wavelength, angular discrimination may be relatively poor. As such, it is likely that user device 100 may not be able to distinguish between remote devices based solely on direction. This scenario is illustrated in Figure 4, which illustrates a remote device 401 disposed behind remote device 104 but in approximately the same direction. Although the direction finding lobes D3 and D4 may be distinguished in the drawing (because the lobes are purely notional), Figure 4 illustrates a situation in which angular discrimination is not sufficiently reliable. As shown, screen 101 has two swipe paths, 401 and 402. These different swipe paths may be executed, for example, by either using two fingers at one time or by two single-finger swipes within a brief time window. Alternatively, swipe speed may be used as a differentiator, similar to throwing some object with more force in order to reach a more distant target. An intuitive user control system may have the number of swipes related to the ordered distance of multiple devices within a particular angle. For example, the two illustrated swipe paths 401 and 402 might indicate selection of remote device 401 rather than remote device 104.

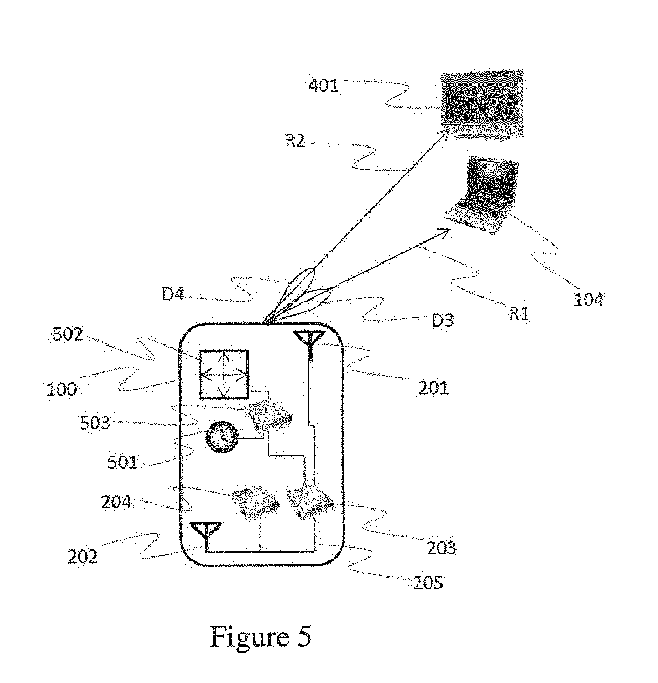

Referring now to Figure 5, internal components of the user device 100 are conceptually depicted in further detail so as to illustrate the technical functionality that enables range discrimination, in order to distinguish among devices based on distance, according to this embodiment. As is shown, the user device 100 incorporates a timer 501, which provides precise time measurements. In radio systems, radio wave propagation delay can be used to estimate range (distance), which is well known in the art. Also illustrated in Figure 5 is an accelerometer 502, which can be used to sense rapid accelerations, such as would occur during a "flicking" motion. The accelerometer 502 is communicatively coupled to a central processor unit (CPU) 503. While the timer 501 is also shown as connected to CPU 503, in other embodiments the timer 501 may be implemented within the CPU 503. The CPU 503 may be programmed to perform the angular and ranging calculations although in other embodiments the receiver 203 may be configured to make such calculations and measurements.

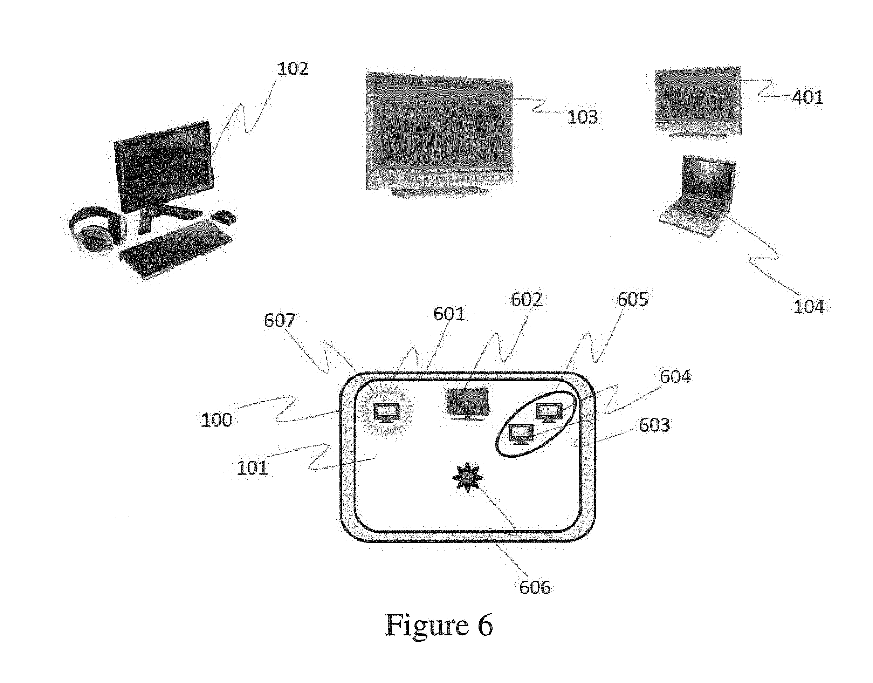

Figure 6 illustrates a display of remote wireless device icons on the screen of the user device according to an embodiment of the disclosure. Such a display allows a user to quickly determine the remote devices within range of the user device 100 and more accurately indicate the selected remote device. As shown, the screen 101 displays four remote device icons, 601-604. The positions of remote device icons 601-604 on the screen 101 roughly correspond to the physical positions of remote devices 102-104 and 401 relative to the user device 100. In this example, remote devices 104 and 401 are approximately in the same direction, relative to the user device 100, but are at different ranges. Correspondingly, the remote device icons 603 and 604 are positioned at different radial distances from the center of screen 101 but at approximately the same angle.

Additionally, to alert the user that angular discrimination is not useable, an ellipse 605 is drawn around both of icons 603 and 604. However, alternative methods of indicating angular overlap to the user are also contemplated. In addition, the remote device icons 601, 603 and 604 are illustrated as generic, while remote device icon 602 is depicted differently than the others. More specifically, remote device icon 602 represents a television, which distinction becomes possible when remote device 103 communicates with user device 100 and indicates to the user device 100 what type of device it is. If the user device 100 has a library of device-specific icons, which could be periodically updated, the user device 100 could select an appropriate icon upon learning the type of remote device 103. Alternatively, the remote device 103 might indicate or even provide its preferred icon to user device 100.

As further shown in Figure 6, the screen 101 also displays a center icon 606, disposed approximately in the center of screen 101. In the embodiment depicted, the center icon 606 represents the user device 100 and its position relative to remote devices 102-104 and 401. Selection of a particular device may be actuated by a user swiping from the center icon 606 to one of the remote device icons 601-604 (or possibly to multiple ones of the remote device icons 601-604) if the media synchronization protocol permits multi-cast transfers. Alternatively, a user may select a device by tapping on a specific one of the remote device icons 601-604. One method of selecting "transfer to" versus "transfer from" could be by swiping from the center icon 606 toward one (or more) of the remote device icons 601-604, which signals a transfer from the user device 100 to the corresponding one(s) of remote devices 102-104 and 401. To select transfer to the remote device 401, as opposed to the closer remote device 104, the user might need to swipe past remote device icon 603 on the screen 101 or perform a double to clearly indicate remote device icon 604. Tapping on one (or more) of remote device icons 601-604 may also signal a transfer from the user device 100 to the corresponding one(s) of remote devices 102-104 and 401.

Swiping from one (or more) of the remote device icons 601-604 toward the center icon 606 may signal a transfer from the corresponding one(s) of the remote devices 102-104 and 401 to the user device 100. To pull a file from the remote device 401, rather than from the closer remote device 104, the user might need to start the swipe beyond the remote device icon 603 to clearly indicate transfer from the remote device icon 604. Tapping on one (or more) of the remote device icons 601-604, and then within a brief time window, tapping on center icon 606 may signal a transfer to the user device 100 from the corresponding one(s) of the remote devices 102-104 and 401.

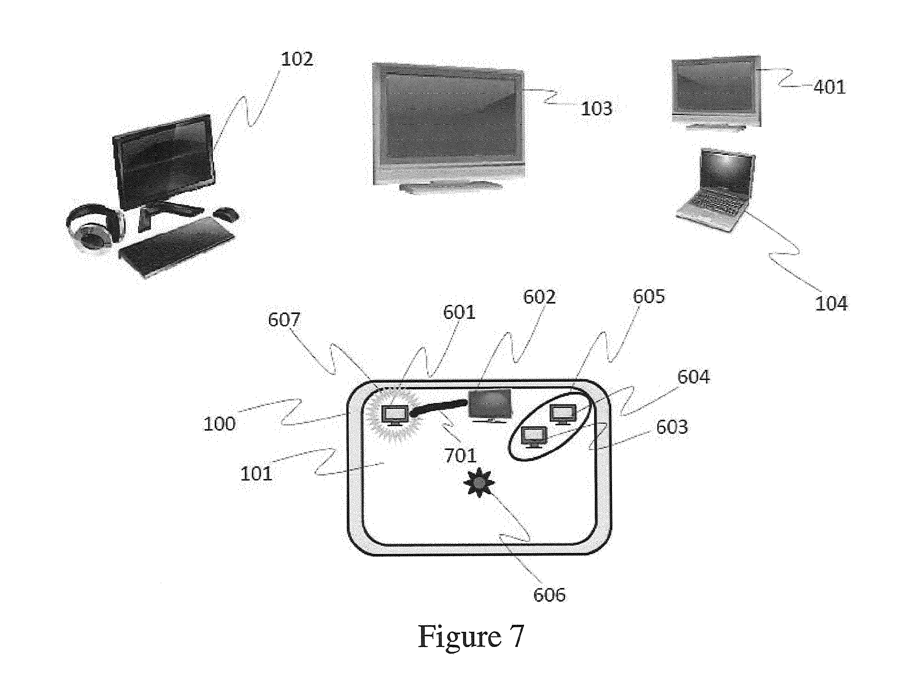

The star highlighting 607 around the remote device icon 601 is one exemplary way to indicate that a particular device (in this example remote device 102) has a file that is available for transfer to user device 100. There are, however, alternative methods of indicating the availability of a file to pull from a remote device. Referring now to Figure 7, a swipe path 701 for transferring a file from remote device 102 to remote device 103 is illustrated. The transfer also may be indicated by tapping on remote device icon 601, and then within a brief time window, tapping on remote device icon 602. In such embodiments, the user device 100 acts as a remote control for the transfer of the file from one remote device to another. In one embodiment, the file to be transferred may be sent from remote device 102 to the user device 100, and then sent from the user device 100 to the remote device 103, thus effectively combining two swipes into one swipe motion. In another embodiment, the file is transferred directly from remote device 102 to remote device 103. Regardless of how the file is actually transferred, the transfer is a seamless one from the perspective of the user of user device 100.

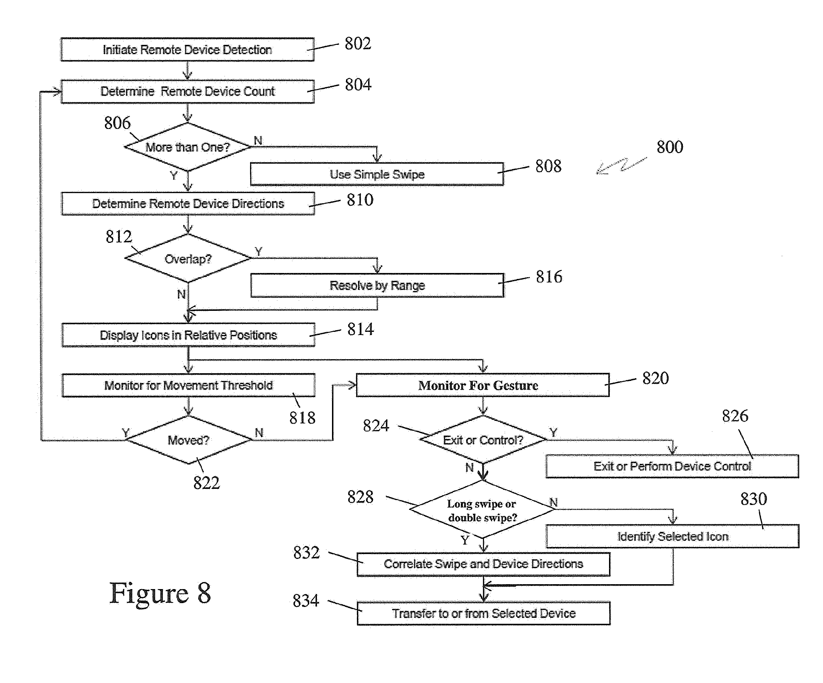

Figure 8 is a flow diagram illustrating a method 800 of implementing digital media hand-off in accordance with an embodiment of the invention. In this embodiment, a user device initiates remote device detection at block 802 and determines a remote device count at block 804. If a single remote device is detected by the user equipment at block 806, the user device may be configured to initiate media transfer via a simple swipe (or other gesture) across the screen as indicated at block 808.

On the other hand, if more than one remote device is detected, the user device determines the directions of the detected remote devices with respect to the user device (e.g., as depicted in any of Figures 1-7) at block 810. If the user device determines that there is no directional overlap with respect to multiple remote devices (e.g., as depicted in any of Figures 1-3) at block 812, then the user device displays icons representative of the remote devices in their relative positions with respect to the user device as indicated at block 814. However, if the user device determines that there is directional overlap with respect to two or more remote devices (e.g., as depicted in any of Figures 4-7) at decision block 812, then the user device resolves the directionally overlapped remote devices by range at block 816. Thereafter, the icons of each remote device may be displayed as indicated at block 814.

It should be noted that while user device is awaiting a user input to either select a particular remote device (or perhaps exit the selection process altogether), the user device also needs to monitor for movement that might change the relative orientation and, thus, the directions from the user device to the remote devices. Upon some threshold level of angular change, the direction and range detections might need to be recalculated. If the user device has an accelerometer, a signal therefrom could be used for an angular change determination. Alternatively, the angular positions of different ones of the remote devices might be continually monitored, and those monitored angles could be used for determination as to whether an entirely new measurement process is required.

This feature of simultaneously monitoring for both movement threshold and gesture (or other user actuation) is reflected in Figure 8 as the method 800 proceeds to both block 818 and 820. The user device monitors for movement of the user device beyond a particular threshold at block 818. If no movement of the user device is detected at decision block 822, the user device monitors for a gesture (actuation) by the user at block 820. On the other hand, if movement is detected, the method returns to block 804 for a redetermination of the device count and position (and possibly range) by the user device.

Following block 820, the user device determines whether a detected gesture (actuation) is an exit or other type of device control action at decision block 824. If so, the method 800 exits or the user device performs the requested device control at block 826. If neither, then the method 800 proceeds to decision block 828 where the user device determines whether the gesture was a long swipe or a double swipe. If the swipe is not a long swipe or a double swipe (indicative of no directional overlap), the user selected icon is identified at block 830. On the other hand, if the swipe is a long swipe or two shorter swipes within a brief time window, the user device correlates the swipe and device directions at block 832 to identify the selected icon. Finally, when the selected icon is identified, the user device performs the desired transfer to or from the selected device at block 834.

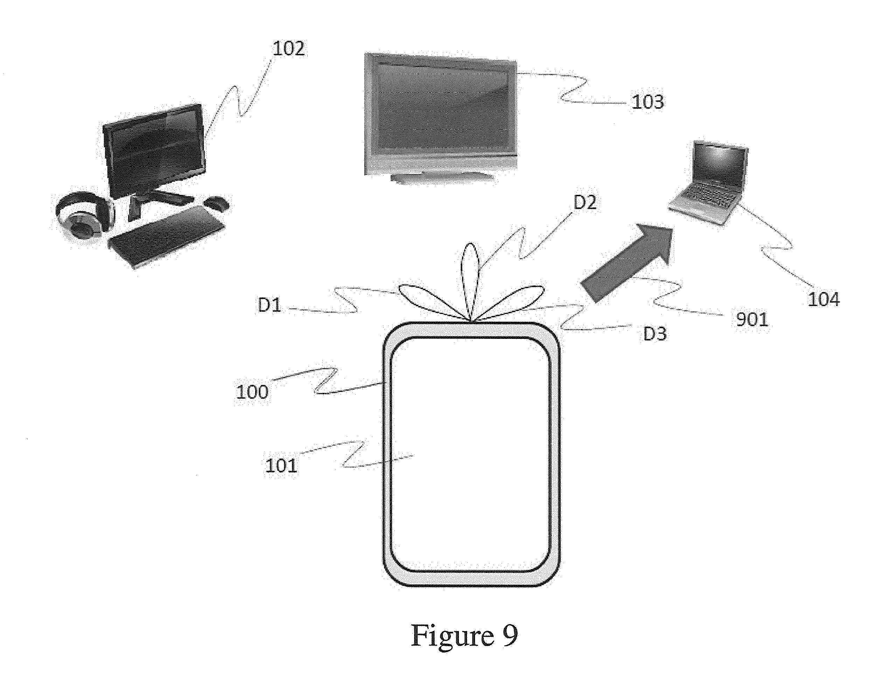

In some embodiments, a user device equipped with an accelerometer may allow the transfer of a file from a user device to remote devices using a flick or a quick movement of the user device towards the general direction of the remote devices. For example, referring Figure 9, instead of a user performing a swiping motion along swipe path 301 (as indicated in Figure 3) with one hand while holding user device 100 in another, the user can simply flick user device 100 towards the general direction of remote device 104 as indicated by directional arrow 901. Similarly, a "reverse flick" towards the user could be used to pull the file from remote device 104 and onto user device 100. In an example, a flick is when the top of the device 100 is quickly tilted in the general direction of the selected remote device to which the content is to be sent. In another example, the entire device 100 is rapidly moved and then stopped, as if being tossed in the direction of the selected remote device.

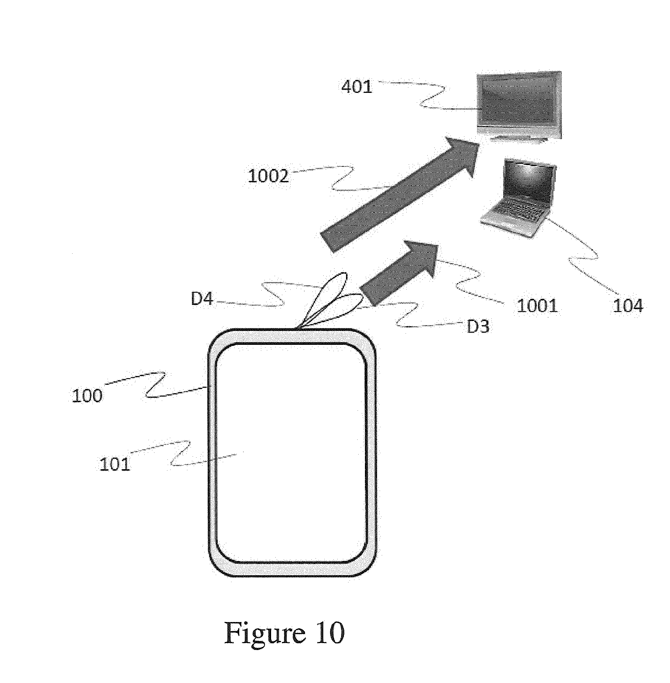

With regard to Figure 10, remote devices 104 and 401 (having similar directional dispositions) could be differentiated from one another by the length of the flick or motion. In particular embodiments, a shorter motion of the user device 100 indicated by arrow 1001 would indicate selection of the closer device, remote device 104, while a longer motion of the user device 100 indicated by arrow 1002 would indicate selection of the more distant device, remote device 401.

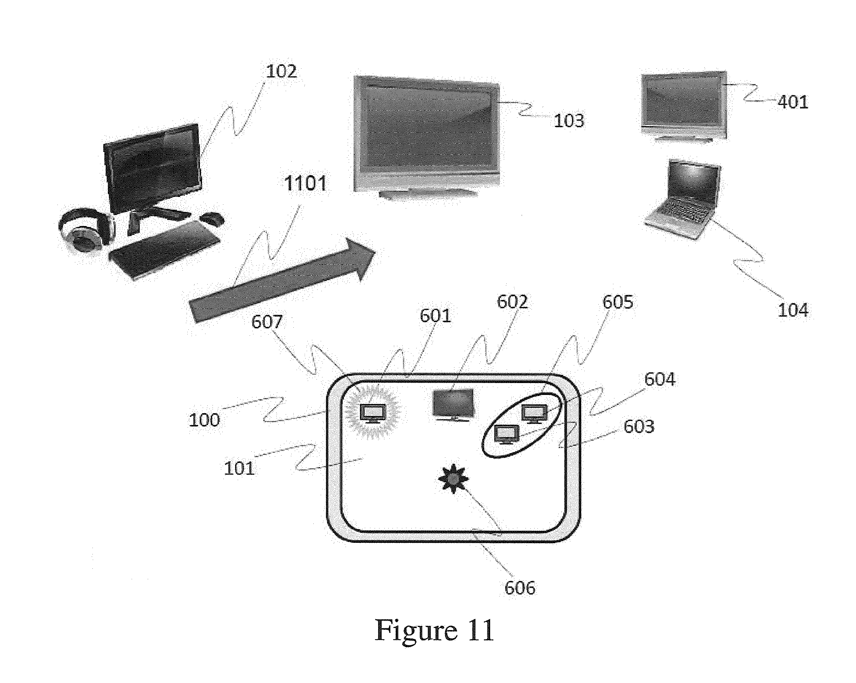

In addition to transferring files to/from the user device 100, Figure 11 illustrates another embodiment in which a flick may also be used to transfer a file from the remote device 102 to another remote device 103 by performing a flick in the direction of arrow 1101. In such embodiments, the recalculation of the angular positions of the remote devices would be delayed once the accelerometer detects an abrupt increase in motion followed quickly by an abrupt stop in motion, i.e., a flick. This prevents the file from being transferred to the wrong remote device as the angular positions of the remote devices would change throughout the flicking motion.

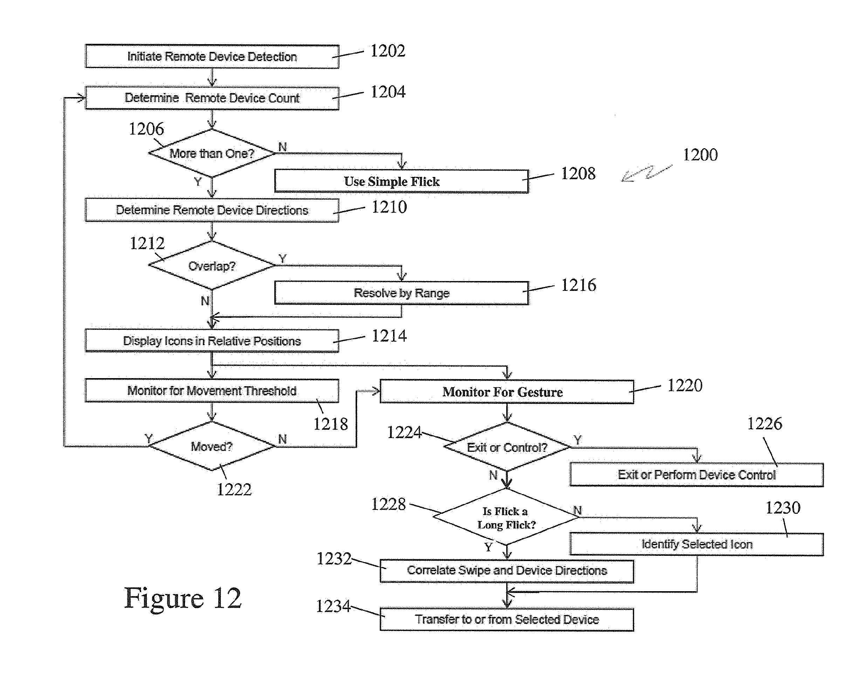

Figure 12 is a flow diagram illustrating a method 1200 of implementing digital media hand-off according to another embodiment of the disclosure. In this embodiment, a user device initiates remote device detection at block 1202 and determines a remote device count at block 1204. If a single remote device is detected by the user equipment at block 1206, the user device may be configured to initiate media transfer via a simple flick (or other gesture) as indicated at block 1208.

On the other hand, if more than one remote device is detected, the user device determines the directions of the detected remote devices with respect to the user device (e.g., as depicted in any of Figures 1-7) at block 1210. If the user device determines that there is no directional overlap with respect to multiple remote devices (e.g., as depicted in any of Figures 1-3) at block 1212, then the user device displays icons representative of the remote devices in their relative positions with respect to the user device as indicated at block 1214. However, if the user device determines that there is directional overlap with respect to two or more remote devices (e.g., as depicted in any of Figures 4-7) at decision block 1212, then the user device resolves the directionally overlapped remote devices by range at block 1216. Thereafter, the icons of each remote device may be displayed as shown at block 1214.

The user device monitors for movement of the user device beyond a particular threshold at block 1218. If no movement of the user device is detected at decision block 1222, the user device monitors for a gesture (actuation) by the user at block 1220. On the other hand, if movement is detected, the method returns to block 1204 for a redetermination of the device count and position (and possibly range) by the user device.

Following block 1220, the user device determines whether a detected gesture (actuation) is an exit or other type of device control action at decision block 1224. If so, the method 1200 exits or the user device performs the requested device control at block 1226. If neither, then the method 1200 proceeds to decision block 1228 where the user device determines whether the flick is a long flick. If the flick is not a long flick (indicative of no directional overlap), the user selected icon is identified at block 1230. On the other hand, if the flick is a long flick, the user device correlates the swipe and device directions at block 1232 to identify the selected icon. Finally, when the selected icon is identified, the user device performs the desired transfer to or from the selected device at block 1234.

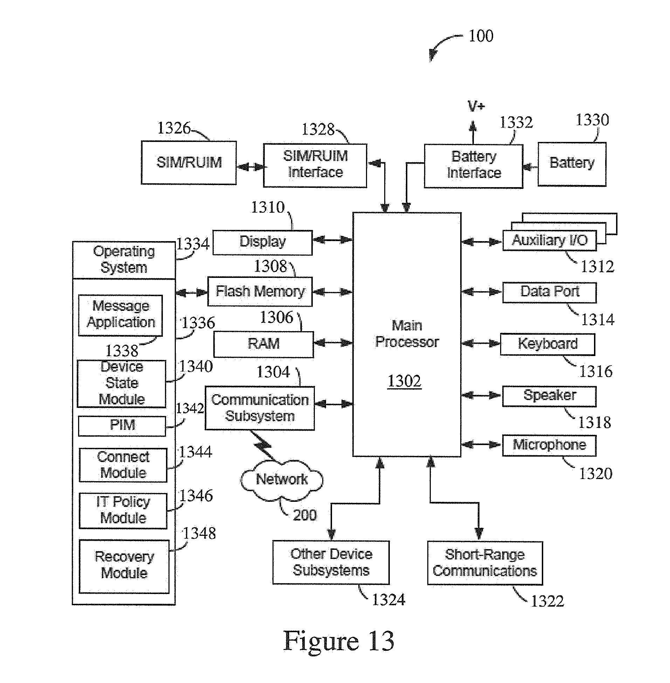

Figure 13 is a block diagram of the user device capable of being used with the systems and methods of the embodiments described herein. The user device 100 includes a number of components such as a main processor 1302 that controls the overall operation of the user device 100. For example, the processor 1302 can perform some of operations associated with the methods described with reference to Figures 8 and 12. Communication functions, including data and voice communications, are performed through a communication subsystem 1304. The communication subsystem 1304 receives messages from and sends messages to a wireless network 200. Communication subsystem 1304 can include or communicate with antenna structures described herein, e.g., antennas 201 and 202 described above.

The main processor 1302 also interacts with additional subsystems such as a Random Access Memory (RAM) 1306, a flash memory 1308, a display 1310, an auxiliary input/output (I/O) subsystem 1312, a data port 1314, a keyboard 1316, a speaker 1318, a microphone 1320, short-range communications 1322 and other device subsystems 1324.

Some of the subsystems of the user device 100 perform communication-related functions, whereas other subsystems may provide "resident" or on-device functions. By way of example, the display 1310 and the keyboard 1316 may be used for both communication-related functions, such as entering a text message for transmission over the network 200, and device-resident functions such as a calculator or task list.

The user device 100 can send and receive communication signals over the wireless network 200 after required network registration or activation procedures have been completed. Network access is associated with a subscriber or user of the user device 100. To identify a subscriber, the user device 100 requires a SIM/RUIM card 1326 (i.e., Subscriber Identity Module or a Removable User Identity Module) to be inserted into a SIM/RUIM interface 1328 in order to communicate with a network. The SIM card or RUIM 1326 is one type of a conventional "smart card" that can be used to identify a subscriber of the user device 100 and to personalize the user device 100, among other things. Without the SIM card 1326, the user device 100 is not fully operational for communication with the wireless network. By inserting the SIM card/RUIM 1326 into the SIM/RUIM interface 1328, a subscriber can access all subscribed services. Services may include: web browsing and messaging such as e-mail, voice mail, Short Message Service (SMS), and Multimedia Messaging Services (MMS).
More advanced services may include: point of sale, field service and sales force automation. The SIM card/RUIM 1326 includes a processor and memory for storing information. Once the SIM card/RUIM 1326 is inserted into the SIM/RUIM interface 1328, it is coupled to the main processor 1302. In order to identify the subscriber, the SIM card/RUIM 1326 can include some user parameters such as an International Mobile Subscriber Identity (IMSI). An advantage of using the SIM card/RUIM 1326 is that a subscriber is not necessarily bound by any single physical user device. The SIM card/RUIM 1326 may store additional subscriber information for a user device as well, including datebook (or calendar) information and recent call information. Alternatively, user identification information can also be programmed into the flash memory 1308.

The user device 100 is typically a battery-powered device and includes a battery interface 1332 for receiving one or more rechargeable batteries 1330. In at least some implementations, the battery 1330 can be a smart battery with an embedded microprocessor. The battery interface 1332 is coupled to a regulator (not shown), which assists the battery 1330 in providing power V+ to the user device 100. Although current technology makes use of a battery, future technologies such as micro fuel cells may provide the power to the user device 100.

The user device 100 also includes an operating system 1334 and software components 1336 to 1348 which are described in more detail below. The operating system 1334 and the software components 1336 to 1348 that are executed by the main processor 1302 are typically stored in a persistent store such as the flash memory 1308, which may alternatively be a read-only memory (ROM) or similar storage element (not shown). Those skilled in the art will appreciate that portions of the operating system 1334 and the software components 1336 to 1348, such as specific device applications, or parts thereof, may be temporarily loaded into a volatile store such as the RAM 1306. Other software components can also be included, as is well know to those skilled in the art. The software components 1336 as they related to execution of the above described method embodiments are exemplary. Additional mechanisms by which executable instructions may transmitted included, for example, by bus and stored in other memory and processing devices.

The subset of software applications 1336 that control basic device operations, including data and voice communication applications, will normally be installed on the user device 100 during its manufacture. Other software applications include a message application 1338 that can be any suitable software program that allows a user of the user device 100 to send and receive electronic messages. Various alternatives exist for the message application 1338 as is well known to those skilled in the art. Messages that have been sent or received by the user are typically stored in the flash memory 1308 of the user device 100 or some other suitable storage element in the user device 100. In at least some implementations, some of the sent and received messages may be stored remotely from the device 100 such as in a data store of an associated host system in communication with the user device 100.

The software applications can further include a device state module 1340, a Personal Information Manager (PIM) 1342, and other suitable modules (not shown). The device state module 1340 provides persistence, i.e. the device state module 1340 ensures that important device data is stored in persistent memory, such as the flash memory 1308, so that the data is not lost when the user device 100 is turned off or loses power.

The PIM 1342 includes functionality for organizing and managing data items of interest to the user, such as, but not limited to, e-mail, contacts, calendar events, voice mails, appointments, task items, and preferred or authorized devices, e.g., 102-104, or 401, on the media sharing network. A PIM application has the ability to send and receive data items via the wireless network. PIM data items may be seamlessly integrated, synchronized, and updated via the wireless network with the user device subscriber's corresponding data items stored and/or associated with a host computer system. This functionality creates a mirrored host computer on the user device 100 with respect to such items. This can be particularly advantageous when the host computer system is the user device subscriber's office computer system.

The user device 100 also includes a connect module 1344, and an IT policy module 1346. The connect module 1344 implements the communication protocols that are required for the user device 100 to communicate with the wireless infrastructure and any host system, such as an enterprise system, with which the user device 100 is authorized to interface.

The connect module 1344 includes a set of APIs that can be integrated with the user device 100 to allow the user device 100 to use any number of services associated with the enterprise system. The connect module 1344 allows the user device 100 to establish an end-to-end secure, authenticated communication pipe with the host system. A subset of applications for which access is provided by the connect module 1344 can be used to pass IT policy commands from the host system to the user device 100. This can be done in a wireless or wired manner. These instructions can then be passed to the IT policy module 1346 to modify the configuration of the device 100. Alternatively, in some cases, the IT policy update can also be done over a wired connection.

The IT policy module 1346 receives IT policy data that encodes the IT policy. The IT policy module 1346 then ensures that the IT policy data is authenticated by the user device 100. The IT policy data can then be stored in the flash memory 1308 in its native form. After the IT policy data is stored, a global notification can be sent by the IT policy module 1346 to all of the applications residing on the user device 100. Applications for which the IT policy may be applicable then respond by reading the IT policy data to look for IT policy rules that are applicable.

The IT policy module 1346 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some implementations, the IT policy module 1346 can determine which applications are affected by the IT policy data and send a notification to only those applications. In either of these cases, for applications that are not running at the time of the notification, the applications can call the parser or the IT policy module 1346 when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 1346 sends an acknowledgement back to the host system to indicate that the IT policy data was received and successfully applied.

The user device 100 also includes a recovery module 1348. As described in conjunction with the remaining figures, the recovery module 1348 facilitates recovery by the UE from a radio link failure. The example recovery module 1348 may control the various layers of the UE (e.g., the MAC layer, the RRC layer, the NAS, etc.) to facilitate recovery. While a single recovery module 1348 illustrated, the recovery module may comprise multiple components and/or may be integrated with other components.

Other types of software applications can also be installed on the user device 100. These software applications can be third party applications, which are added after the manufacture of the user device 100. Examples of third party applications include games, calculators, utilities, etc.

The additional applications can be loaded onto the user device 100 through at least one of the wireless network, the auxiliary I/O subsystem 1312, the data port 1314, the short-range communications subsystem 1322, or any other suitable device subsystem 1324. This flexibility in application installation increases the functionality of the user device 100 and may provide enhanced on-device functions, communication-related functions, or both. For example, secure communication applications may enable electronic commerce functions and other such financial transactions to be performed using the user device 100.

The data port 1314 enables a subscriber to set preferences through an external device or software application and extends the capabilities of the user device 100 by providing for information or software downloads to the user device 100 other than through a wireless communication network. The alternate download path may, for example, be used to load an encryption key onto the user device 100 through a direct and thus reliable and trusted connection to provide secure device communication.

The data port 1314 can be any suitable port that enables data communication between the user device 100 and another computing device. The data port 1314 can be a serial or a parallel port. In some instances, the data port 1314 can be a USB port that includes data lines for data transfer and a supply line that can provide a charging current to charge the battery 1330 of the user device 100.

The short-range communications subsystem 1322 provides for communication between the user device 100 and different systems or devices without the use of the wireless network. For example, the subsystem 1322 may include an infrared device and associated circuits and components for short-range communication. Examples of short-range communication standards include standards developed by the Infrared Data Association (IrDA), Bluetooth, and the 802.11 family of standards developed by IEEE. Such short range communication may use the antenna(s) described herein.

In use, a received signal such as a text message, an e-mail message, or web page download will be processed by the communication subsystem 1304 and input to the main processor 1302. The main processor 1302 will then process the received signal for output to the display 1310 or alternatively to the auxiliary I/O subsystem 1312. A subscriber may also compose data items, such as e-mail messages, for example, using the keyboard 1316 in conjunction with the display 1310 and possibly the auxiliary I/O subsystem 1312. The auxiliary subsystem 1312 may include devices such as: a touch screen, mouse, track ball, infrared fingerprint detector, an optical navigation control or trackpad, or a roller wheel with dynamic button pressing capability. The keyboard 1316 is preferably an alphanumeric keyboard and/or telephone-type keypad. However, other types of keyboards may also be used. A composed item may be transmitted over the wireless network through the communication subsystem 1304.

For voice communications, the overall operation of the user device 100 is substantially similar, except that the received signals are output to the speaker 1318, and signals for transmission are generated by the microphone 1320. Alternative voice or audio I/O subsystems, such as a voice message recording subsystem, can also be implemented on the user device 100. Although voice or audio signal output is accomplished primarily through the speaker 1318, the display 1310 can also be used to provide additional information such as the identity of a calling party, duration of a voice call, or other voice call related information.

While an example manner of implementing the user device 100 including the recovery module 1348 is illustrated in Figure 13, one or more of the elements, processes and/or devices illustrated in Figure 13 may be combined, divided, re-arranged, omitted, eliminated and/or implemented in any other way. Further, the illustrated components (including the recovery module 1348) of the user device 100 may be implemented by hardware, software, firmware and/or any combination of hardware, software and/or firmware. Thus, the components of the user device 100 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended apparatus claims are read to cover a purely software and/or firmware implementation, at least one of the components are hereby expressly defined to include a computer readable medium such as a memory, DVD, CD, etc. storing the software and/or firmware.

As will thus be appreciated, an exemplary embodiment of the disclosure includes a wireless user device having a first antenna optimized to perform a first wireless function and a second antenna optimized to perform a second wireless function different than the first wireless function. The first antenna and the second antenna are further configured to identify and resolve locations of a plurality of remote wireless devices by signal phase comparison. Circuitry in the communication system 1304 may assist in this resolution of the wireless devices. In an example, the processor 1302 may assist in the resolution of the wireless devices. One exemplary method may be to use relative phase information from multiple receivers, along with knowledge of the antenna placement within the device, relative to the screen orientation, to ascertain the directions of arrival of multiple incoming signals that each correspond to one of multiple remote devices. A display screen is configured to display an icon for each identified remote wireless device at an area of the display screen that corresponds to the relative location of the remote wireless device with respect to the user device.

Another exemplary embodiment of the disclosure is method in a wireless user device. The method includes identifying locations of one or more remote wireless devices by comparing a phase of a signal received from a first antenna with a phase of a signal received from a second antenna. The first antenna is optimized to perform a first wireless function and the second antenna is optimized to perform a second wireless function different than the first wireless function. An icon for each identified remote wireless device is displayed at an area of a display screen that corresponds to the relative location of the remote wireless device with respect to the user device.

While the disclosure has been described with reference to a preferred embodiment or embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for canying out this disclosure, but that the disclosure will include all embodiments falling within the scope of the appended claims.

## Claims

1. A wireless user device (100), comprising:
a first antenna (201) operable within a first wireless function frequency band;
a second antenna (202) operable within a second wireless function frequency band different than the first wireless function frequency band;
circuitry (203, 204) configured to process signals received by the first antenna (201) and the second antenna (202), the circuitry (203, 204) being further configured to identify and resolve locations of a plurality of remote wireless devices (102, 103, 104, 401) by signal phase comparison; and
a display screen (101) configured to display an icon (601, 602, 603, 604) for the identified remote wireless devices at an area of the display screen that corresponds to the relative location of the remote wireless device with respect to the user device.

2. The wireless user device of claim 1, wherein the first and second antennas (201, 202) are physically separated, and operate within respective frequency bands such that phase differences therebetween are ascertainable.

3. The wireless user device of claim 2, wherein the first wireless function comprises one of: a cellular antenna function, a Wi-Fi function, and a Bluetooth function, and the second wireless function comprises a different one of: the cellular antenna function, the Wi-Fi function, and the Bluetooth function.

4. The wireless user device of claim 1, further comprising:
a detector (502) configured to detect a user input that selects one of the icons; and
a processor (503) configured to transfer one or more digital media files between the user device and the remote wireless device corresponding to the selected icon.

5. The wireless user device of claim 4, wherein the user input is one of: a swipe path over the display screen, a tap over the display screen, or a movement of the user device.

6. The wireless user device of claim 1, further comprising:
a detector configured to detect a user input that selects a first icon; and
a processor configured to transfer one or more digital media files between a first remote wireless device corresponding to the first icon and a second remote wireless device.

7. The wireless user device of claim 1, further comprising:
a detector (502) configured to detect movement of the user device in a direction of an identified remote wireless device; and
a processor (503) configured to transfer one or more digital media files between the user device and the identified remote wireless device.

8. The wireless user device of claim 1, further comprising:
a detector (502) configured to detect movement of the user device in a direction of a first identified remote wireless device; and
a processor (503) configured to transfer one or more digital media files between the first identified remote wireless device and a second identified remote wireless device.

9. The wireless user device of claim 1, wherein the display screen is further configured to display a visual indicator (605) to indicate a lack of angular discrimination between two or more of the plurality of remote wireless devices that have approximately a same direction with respect to the user device, and
the detector is further configured to determine a selected device among the two or more of the plurality of remote wireless devices having approximately the same direction with respect to the user device by one of: a detected length of a swipe path, or a detected speed of a swipe path.

10. The wireless user device of claim 1, wherein the display screen is further configured to display a visual indicator (605) to indicate a lack of angular discrimination between two or more of the plurality of remote wireless devices that have approximately a same direction with respect to the user device, and
the detector is further configured to determine a selected device among the two or more of the plurality of remote wireless devices having approximately the same direction with respect to the user device by a detected length of a movement of the user device.

11. A method in the wireless user device of claim 1, the method comprising:
identifying locations (810) of the one or more remote wireless devices by comparing a phase of a signal received from the first antenna with a phase of a signal received from the second antenna; and
displaying an icon (814) for each identified remote wireless device at the area of the display screen that corresponds to the relative location of the remote wireless device with respect to the user device.

12. The method of claim 11, wherein the first and second antennas are physically separated, and are configured to operate within respective frequency bands such that phase differences therebetween are ascertainable.

13. The method of claim 11, wherein the first wireless function comprises one of:
a cellular antenna function, a Wi-Fi function, and a Bluetooth function, and the second wireless function comprises a different one of: the cellular antenna function, the Wi-Fi function, and the Bluetooth function.

14. The method of claim 11, further comprising:
detecting a user input (820) that selects one of the icons; and
transferring one or more digital media files between the user device and the remote wireless device corresponding to the selected icon (834).

15. The method of claim 14, wherein the user input is one of: a swipe path over the display screen, a tap over the display screen, or a movement of the user device.
